# FASCICULE DE BREVET EUROPEEN

(11) **EP 3 064 916 B1**
(45) Date de publication et mention de la délivrance du brevet: **08.05.2019**
(21) Numéro de dépôt: 16158270.5
(22) Date de dépôt: 02.03.2016
(51) Int. Cl.: G01K 1/14

(54) **DISPOSITIF POUR MESURER LA TEMPERATURE POUR TABLE DE CUISSON**
TEMPERATURMESSGERÄT FÜR KOCHHERD
DEVICE FOR MEASURING TEMPERATURE FOR A COOKTOP

(30) Priorité: 03.03.2015 FR 1551777
(43) Date de publication de la demande: 07.09.2016
(73) Titulaire: Groupe Brandt, 92500 Rueil-Malmaison (FR)
(72) Inventeur: NUGEYRE, Jean-Pierre, 45370 CLERY SAINT ANDRE (FR)
(74) Mandataire: Santarelli

(56) Documents cités:
- EP-A1- 0 412 875
- CN-U- 203 519 182
- FR-A1- 2 744 589
- FR-A1- 2 935 449

## Description

La présente invention concerne un dispositif pour mesurer la température d'un récipient placé au-dessus d'un inducteur dans une table de cuisson.

L'invention concerne également une table de cuisson à induction comportant au moins un dispositif pour mesurer la température.

Il est connu de disposer sur un inducteur formant un foyer de cuisson, un dispositif de mesure de la température du fond d'un récipient posé sur le foyer de cuisson.

Le document FR2935449 divulgue une unité de montage d'un capteur de température.

Le document FR2744598 décrit un inducteur pour une plaque de cuisson comportant un capteur de température.

Le document EP 0 412 875 divulgue un dispositif de mesure de la température d'un récipient chauffé par une table de cuisson à induction, comportant un capteur de température délivrant une mesure de la température, et un conducteur de chaleur ou conducteur thermique en contact thermique avec le capteur de température.

Le conducteur thermique présente une forme permettant de moyenner la température sur une surface déterminée correspondant à au moins une partie de la surface de l'inducteur sur lequel le dispositif pour mesurer la température est placé.

Plusieurs modes de réalisation du dispositif de mesure de température sont divulgués par le document EP 0 412 875, dans lesquels le conducteur thermique comprend une base et plusieurs languettes partant de la base. Le capteur de température est placé sur la base du conducteur thermique. L'ensemble formé par le capteur de température et le conducteur thermique est disposé sur un inducteur de façon à mesurer la température du fond d'un récipient placé au-dessus de l'inducteur.

De manière connue, le capteur de température est placé sur un élément de support, l'élément de support étant fixé sur le conducteur thermique au moyen de deux pattes formées dans le conducteur thermique venant s'insérer par sertissage respectivement dans deux fentes prévues dans l'élément de support.

Du fait du sertissage de l'élément de support sur le conducteur thermique, les pattes formées dans le conducteur thermique subissent une pression qui entraine le relâchement du sertissage lorsque la température augmente.

A cause du relâchement du sertissage entre l'élément de support et le conducteur thermique, le contact thermique entre le capteur de température et le conducteur thermique n'est pas assuré.

La présente invention a pour but de résoudre au moins l'un des inconvénients précités et de garantir le contact thermique entre un capteur de température et un conducteur thermique.

A cet effet, la présente invention concerne selon un premier aspect un dispositif pour mesurer la température, notamment d'un récipient placé au-dessus d'un inducteur dans une table de cuisson, le dispositif pour mesurer la température comportant un capteur de température, un élément de support du capteur de température et un conducteur thermique en contact thermique avec le capteur de température.

Selon l'invention, l'élément de support comporte deux excroissances et le conducteur thermique comporte deux pièces de maintien, chaque pièce de maintien comportant un évidement destiné à loger une excroissance de l'élément de support, le conducteur thermique étant en métal.

Ainsi, la présente invention propose un dispositif pour mesurer la température comportant un capteur de température, un élément de support du capteur de température et un conducteur thermique, le capteur de température étant en contact thermique avec le conducteur thermique, dans lequel le capteur de température et le conducteur thermique restent en contact thermique entre eux lorsque les excroissances de l'élément de support sont logées respectivement dans les pièces de maintien.

En effet, les excroissances de l'élément de support étant logées respectivement dans les pièces de maintien comportant un évidement, l'élément de support et le conducteur thermique restent fixés l'un à l'autre.

Le conducteur thermique étant en métal présente une bonne conductivité thermique.

Le conducteur thermique est par exemple en aluminium.

Par conséquent, le capteur de température et le conducteur thermique restent en contact thermique entre eux, et ce même si la température à laquelle est soumise le dispositif pour mesurer la température augmente.

Selon une autre caractéristique, le conducteur thermique comporte une base destinée à recevoir l'élément de support, et un ensemble de languettes partant de la base, les pièces de maintien étant deux étriers disposés symétriquement de part et d'autre de la base du conducteur thermique.

Le conducteur thermique comporte ainsi une première partie ou base à laquelle l'élément de support vient se fixer, et une deuxième partie formée par un ensemble de languettes s'étendant à partir de la base.

Selon une caractéristique, la base comporte une partie de réception destinée à recevoir le capteur de température, la partie de réception ayant une encoche de forme complémentaire à la forme du capteur de température.

Le capteur de température est ainsi maintenu en place lorsqu'il est monté sur l'élément de support.

Selon une caractéristique, l'élément de support comporte un corps de support destiné à recevoir ledit capteur de température, les excroissances étant disposées symétriquement de part et d'autre du corps de support, et une base de fixation s'étendant en saillie en partant du corps de support.

L'élément de support comporte ainsi une première partie ou corps de support dans lequel est placé le capteur de température et par lequel l'élément de support est fixé au conducteur thermique, et une deuxième partie ou base de fixation destinée à positionner le dispositif pour mesurer la température où la température doit être mesurée.

Par exemple, le dispositif pour mesurer la température peut être positionné à proximité d'un inducteur afin de mesurer la température d'un récipient placé au-dessus de l'inducteur.

Selon une autre caractéristique, la base de fixation de l'élément de support a une forme sensiblement cylindrique et comporte au moins une nervure disposée sur la surface cylindrique et s'étendant en partant du corps de support.

Selon encore une autre caractéristique, l'élément de support comporte deux évidements de connexion traversant le corps de support et la base de fixation.

Les évidements de connexion peuvent recevoir des fils électriques provenant du capteur de température, les fils électriques entrant d'un premier côté de l'élément de support et sortant d'un côté opposé à ce premier côté de l'élément de support pour pouvoir être reliés électriquement, par exemple à une carte électronique.

Selon une caractéristique, la base de fixation comporte des gorges s'étendant en partant du corps de support.

Ainsi, la préhension de l'élément de support pour le montage sur le conducteur thermique est aisée.

Selon une caractéristique avantageuse, le dispositif pour mesurer la température comporte en outre un premier plateau isolant et un second plateau isolant réalisés en matériau diélectrique disposés respectivement de part et d'autre d'un ensemble formé par le conducteur thermique et l'élément de support.

Ainsi, grâce aux plateaux isolants en matériau diélectrique disposés autour du conducteur thermique et de l'élément de support sur lequel le capteur de température est monté, le conducteur thermique et le capteur de température sont isolés électriquement.

Ainsi, lorsque par exemple le dispositif pour mesurer la température est disposé à proximité d'un inducteur, le champ magnétique produit par l'inducteur n'a pas d'influence électromagnétique sur le conducteur thermique et le capteur de température.

En pratique, au moins un des plateaux isolants recouvre la totalité du conducteur thermique.

Par conséquent, le conducteur thermique et le capteur de température sont isolés davantage.

Selon une autre caractéristique, l'élément de support est en matériaux élastomère, par exemple en silicone.

Le capteur de température et les fils électriques reliant le capteur de température à des circuits électroniques (intégrés par exemple sur une carte électronique) sont ainsi isolés électriquement.

En outre, grâce aux propriétés des matériaux élastomères, l'élément de support est facilement monté sur le conducteur thermique.

Par ailleurs, les matériaux élastomères ayant une bonne tenue aux variations de température, l'élément de support n'est pas déformé par l'effet de la température.

Ceci permet de garantir dans le temps le bon contact thermique entre le capteur de température et le conducteur thermique.

Selon un deuxième aspect, la présente invention concerne un ensemble pour mesurer la température, notamment d'un récipient placé au-dessus d'un inducteur, comportant un support d'inducteur pour loger un inducteur et un dispositif pour mesurer la température conforme à l'invention fixé au support d'inducteur.

Selon une caractéristique, le support d'inducteur comporte au centre une ouverture sensiblement circulaire destiné à la fixation du support d'inducteur avec l'élément de support.

Ainsi, le dispositif pour mesurer la température est fixé au support d'inducteur de façon à rester positionné de façon stable.

Le dispositif pour mesurer la température est ainsi fixé au centre du support d'inducteur au moyen de l'élément de support.

Selon un troisième aspect, la présente invention concerne une table de cuisson à induction comportant au moins un inducteur et un ensemble pour mesurer la température d'un récipient placé au-dessus dudit au moins un inducteur conforme à l'invention.

L'ensemble pour mesurer la température d'un récipient placé au-dessus d'un inducteur, ainsi que la table de cuisson à induction présentent des caractéristiques et avantages similaires à ceux décrits précédemment en relation avec le dispositif pour mesurer la température.

En particulier, dans le cas d'une table de cuisson dans laquelle le dispositif pour mesurer la température est fixé au centre du support d'inducteur, le dispositif pour mesurer la température est fixé dans une position adéquate pour réaliser une bonne mesure de la température du fond d'un récipient placé au-dessus d'un inducteur.

En outre, le conducteur thermique et l'élément de support restant fixé l'un à l'autre, le contact thermique entre le conducteur thermique et le capteur de température est assuré.

D'autres particularités et avantages de l'invention apparaîtront encore dans la description ci-après.

Aux dessins annexés, donnés à titre d'exemples non limitatifs :
- la figure 1 est une vue schématique d'une table de cuisson à induction selon un mode de réalisation de l'invention ;
- la figure 2a représente une vue en perspective d'un élément de support d'un capteur de température et d'un conducteur thermique selon un mode de réalisation de l'invention ;
- la figure 2b représente une vue en perspective d'un élément de support d'un capteur de température monté sur l'élément conducteur thermique selon un mode de réalisation de l'invention ;
- la figure 3 est une vue en perspective d'un inducteur disposé dans un support d'inducteur d'une table de cuisson à induction ;
- la figure 4 représente une vue en perspective d'un dispositif de mesure de température selon un premier mode de réalisation de l'invention ; et
- la figure 5 représente une vue en perspective d'un dispositif de mesure de température selon un second mode de réalisation de l'invention.

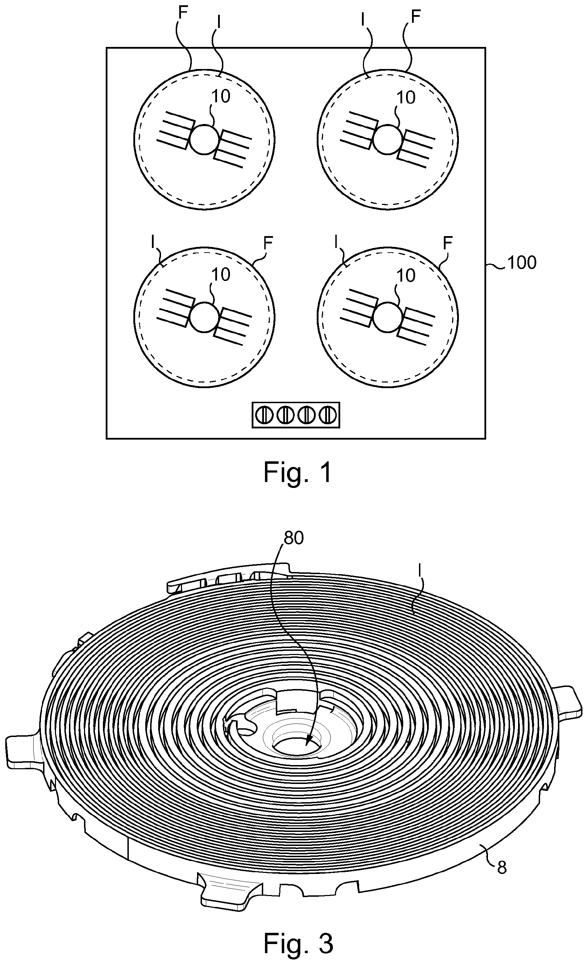

La figure 1 représente schématiquement une table de cuisson à induction 100 comportant quatre foyers de cuisson F, chaque foyer de cuisson F étant associé à des moyens d'induction comprenant au moins une bobine d'induction ou inducteur I.

Dans ce mode de réalisation, les inducteurs sont de forme circulaire.

Bien entendu, des inducteurs de forme différente peuvent être utilisés, par exemple de forme triangulaire, rectangulaire ou octogonale.

Un dispositif pour mesurer la température 10 est associé à chaque inducteur I.

Le dispositif pour mesurer la température 10 est destiné à mesurer la température d'un récipient posé sur un foyer de cuisson F, c'est-à-dire placé au-dessus d'un inducteur I.

De manière classique, la température mesurée par le dispositif pour mesurer la température est utilisée par des moyens de contrôle et de commande (non représentés sur la figure) gérant le fonctionnement de la table de cuisson 100.

Les inducteurs I, ainsi que les moyens de contrôle et de commande de la table de cuisson 100 sont placés sous une surface plane de cuisson, par exemple réalisée à partir d'une plaque en vitrocéramique.

Le dispositif pour mesurer la température 10 est disposé au-dessus d'un inducteur I, c'est-à-dire qu'il est placé entre l'inducteur I et la plaque en vitrocéramique.

Ainsi, le dispositif pour mesurer la température 10 disposé au-dessus d'un inducteur I, mesure la température d'un récipient placé au-dessus de l'inducteur I.

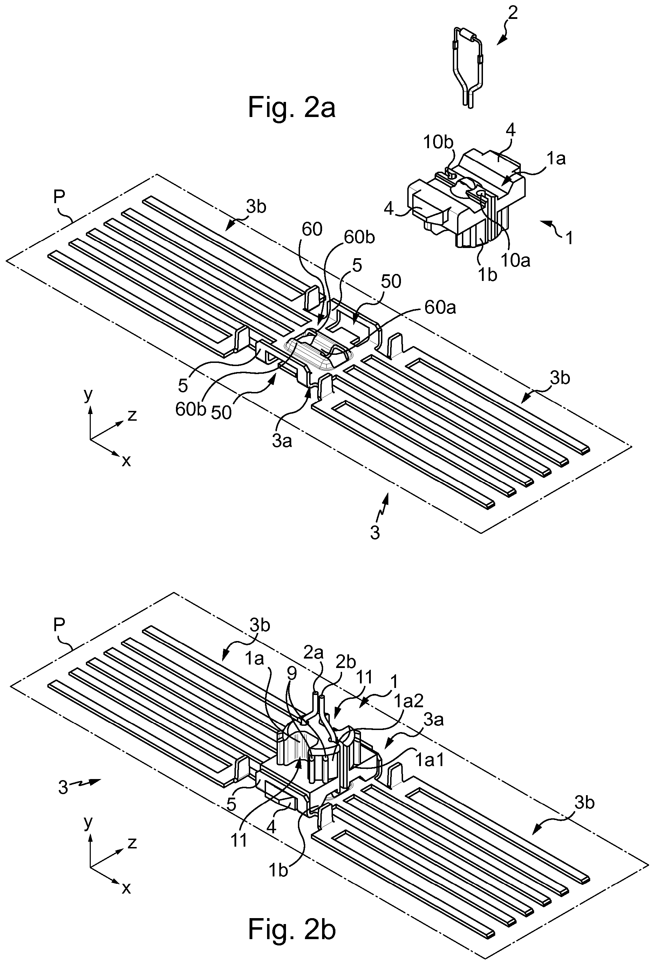

La figure 2a décrit schématiquement un mode de réalisation d'un capteur de température 2, un élément de support 1 d'un capteur de température 2, et un conducteur thermique 3 formant partis d'un dispositif pour mesurer la température 10 utilisé dans une table de cuisson à induction 100.

La figure 2b représente schématiquement le dispositif pour mesurer la température 10 dans lequel l'élément de support 1 est monté sur le conducteur thermique 3, le capteur de température 2 étant monté sur l'élément de support 1. Lorsque l'élément de support 1 avec le capteur de température 2 est monté sur le conducteur thermique 3, le capteur de température 2 est en contact thermique avec le conducteur thermique 3.

L'élément de support 1 comporte un corps de support 1a et une base de fixation 1b. Le corps de support 1a est destiné à recevoir le capteur de température 2, et la base de fixation 1b est destinée à fixer l'élément de support 1 où la température doit être mesurée, au-dessus d'un inducteur I dans une table de cuisson 100.

Les capteurs de température et par exemple une diode à coefficient de température négative (CTN).

Bien entendu, d'autres capteurs de température peuvent être utilisés, par exemple des capteurs de température à coefficient de température positive, des thermocouples ou des thermorésistantes.

Dans un mode de réalisation, l'élément de support 1 est en matériau élastomère. Cet élastomère peut être par exemple de la silicone.

Par exemple, la réalisation de l'élément de support 1 en matériau élastomère est réalisée par moulage.

Grâce à l'élément de support 1 réalisé en matériau élastomère, le capteur de température 1 est isolé électriquement. En outre, l'élément de support 1 en matériau élastomère présente une bonne tenue en température.

Dans le mode de réalisation décrit, le conducteur thermique 3 s'étend dans un plan P et comporte une base 3a destinée à recevoir l'élément de support 1 et un ensemble de languettes 3b partant de la base 3a.

Le conducteur thermique 3 peut présenter des formes différentes comme par exemple celles décrites dans le document EP 0 412 875.

En particulier, les languettes de l'ensemble de languettes 3b ont une longueur prédéterminée et s'étendent dans le plan P de façon à tenir compte de la température dans une surface autour du capteur de température 2.

Dans un mode de réalisation, le conducteur thermique 3 est en métal.

Dans le mode de réalisation décrit, le conducteur thermique 3 est en aluminium.

Le corps de support 1a de l'élément de support 1 comporte deux excroissances 4 disposées selon une direction parallèle au plan P dans lequel s'étend le conducteur thermique 3. Les excroissances 4 sont disposées symétriquement de part et d'autre du corps de support 1a.

La base de fixation 1b de l'élément de support 1 s'étend en saillie en partant du corps de support 1a, c'est-à-dire qu'elle s'étend dans une direction perpendiculaire au plan P.

Dans le mode de réalisation décrit, la base de fixation 1b présente une forme généralement cylindrique, un premier plan du cylindre 1a1 juxtaposant le corps de support 1a.

Au moins une nervure 9 est disposée sur la surface cylindrique 1a2 de la base de fixation 1a en partant du corps de support 1a.

Dans l'exemple de réalisation décrit, la surface cylindrique 1a2 comporte neuf nervures 9. Ainsi, les nervures 9 s'étendent dans une direction sensiblement perpendiculaire au plan P dans lequel le conducteur thermique 3 s'étend.

Bien entendu, le nombre de nervures 9 peut être différent.

Revenant au conducteur thermique 3, la base 3a comporte deux pièces de maintien 5 formant respectivement deux étriers.

Les étriers sont disposés symétriquement de part et d'autre de la base 3a du conducteur thermique 3.

Chaque pièce de maintien 5 ou étrier comporte un évidement 50 qui est destiné à loger une excroissance 4 de l'élément de support 1.

Une fois que le capteur de température 2 est monté sur le corps de support 1a, l'élément de support 1 est fixé sur le conducteur thermique 3 en introduisant chaque excroissance 4 dans chaque étrier 5 du conducteur thermique 3 respectivement.

Ainsi, les excroissances 4 de l'élément de support 1 étant logées respectivement dans les pièces de maintien 5 comportant un évidement 50 ou étriers, l'élément de support 1 et le conducteur thermique 3 restent fixés l'un à l'autre, et par conséquent, le capteur de température 2 et le conducteur thermique 3 restent en contact thermique entre eux, et ce même si la température à laquelle est soumise le dispositif pour mesurer la température augmente.

La base 3a du conducteur thermique 3 comporte en outre une partie de réception 60 destiné à recevoir le capteur de température 2. La partie de réception 60 est située entre les pièces de maintien 5.

Cette partie de réception 60 comporte une encoche 60a ayant une forme complémentaire à la forme du capteur de température 2.

L'encoche 60a est destinée à loger et à maintenir le capteur de température 2 en place lorsqu'il est monté sur l'élément de support 1.

La partie de réception 60 comporte en outre, deux parties latérales 60b, situées de part et d'autre de l'encoche 60a et s'étendant longitudinalement dans une direction parallèle au plan P dans lequel s'étend le conducteur thermique 3.

Dans le mode de réalisation décrit, les parties latérales 60b ont une forme courbée.

L'encoche 60a et les parties latérales 60b contribuent à la transmission des informations thermiques du conducteur thermique 3 au capteur de température 2.

L'encoche 60a et les parties latérales 60b sont par exemple formées par emboutissage dans une plaque de métal. Ce métal est par exemple l'aluminium.

En outre, l'élément de support 1 comporte deux évidements de connexion 10a, 10b, les évidements de connexion 10a, 10b traversant le corps du support 1a et la base de fixation 1b. Ainsi, les deux évidements de connexion 10a, 10b traversent l'élément de support 1 selon une direction sensiblement perpendiculaire au plan P dans lequel le conducteur thermique 3 s'étend.

Des fils électriques 2a, 2b reliant le capteur de température 2 sont introduits respectivement dans les deux évidements de connexion 10a, 10b.

Les fils électriques de connexion 2a, 2b traversent ainsi l'élément de support 1 et ressortent, comme il peut être visualisé sur la figure 2b, de façon à pouvoir être connectés à des circuits électriques (non représentés sur les figures).

Par exemple, lorsque le dispositif pour mesurer la température 10 est monté en regard d'un inducteur I dans une table de cuisson 100, les fils électriques de connexion 2a, 2b peuvent être reliés à un circuit électrique gérant le fonctionnement de la table de cuisson 100.

Par ailleurs, dans le mode de réalisation décrit, la base de fixation 1b comporte deux évidements ou gorges 11 réalisées sur la surface cylindrique 1a2 et s'étendant dans une direction perpendiculaire au plan P dans lequel le conducteur thermique 3 s'étend.

La tenue en main de l'élément de support 1 par un opérateur, en particulier pour son montage sur le conducteur thermique 3, est facilitée grâce aux gorges 11.

En outre, le volume de l'élément de support 1 est diminué, nécessitant ainsi une quantité inférieure de matériau pour sa formation.

Lorsque le dispositif pour mesurer la température 10 est installé dans une table de cuisson 100 pour mesurer la température du fond d'un récipient placé au-dessus d'un inducteur I, le dispositif pour mesurer la température 10 est fixé à un support d'inducteur 8.

Le support d'inducteur 8 est destiné à loger un inducteur I.

La figure 3 représente un support d'inducteur 8 conforme à un mode de réalisation, logeant un inducteur I.

Dans le mode de réalisation décrit, le support d'inducteur 8 présente une forme circulaire, et une taille pour pouvoir loger un inducteur I.

Dans l'exemple de la figure 3, l'inducteur I ainsi que le support d'inducteur 8 présentent une forme circulaire.

Bien entendu, la forme et la taille de l'inducteur I et du support d'inducteur 8 peuvent être différentes.

Dans un mode de réalisation, le support d'inducteur 8 comporte au centre une ouverture 80 dans laquelle le dispositif pour mesurer la température 10 vient se fixer.

En particulier, l'ouverture 80 reçoit la base de fixation 1b de l'élément de support 1.

Dans le mode de réalisation décrit, l'ouverture 80 a une forme et une taille complémentaire à la forme et la taille de la base de fixation 1b de l'élément de support 1. Ainsi, dans ce mode de réalisation, l'ouverture 80 est sensiblement circulaire.

Le diamètre de l'ouverture 80 du support d'inducteur 8 est sensiblement égal au diamètre de la section de la base de fixation 1b de l'élément de support 1, de sorte que la base de fixation 1b de l'élément de support 1 reste fixée au support d'inducteur 8 une fois que la base de fixation 1b de l'élément de support 1 est insérée dans l'ouverture 80 du support d'inducteur 8.

L'insertion de la base de fixation 1b dans l'ouverture 80 est réalisée en force, les nervures 9 disposées sur la surface cylindrique 1a2 de la base de fixation 1b se déformant lors de l'insertion, et servant ensuite une fois que la base de fixation 1b est insérée dans l'ouverture 80, comme accroche entre le dispositif pour mesurer la température 10 et le support d'inducteur 8.

L'élément de support 1 réalisé en élastomère facilite son montage et son maintien sur le support d'inducteur 8.

On notera que les évidements ou gorges 11 permettent à l'élément de support 1, en particulier à la matière le constituant, de s'étendre une fois qu'il est rentré en force dans l'ouverture 80 du support d'inducteur 8.

Dans un mode de réalisation (pas représenté sur les figures), des bossages sont positionnés dans l'ouverture 80 du support d'inducteur 8. Les bossages sont positionnés de façon à coopérer avec les évidements ou gorges 11 de l'élément de support 1 de façon à assurer le positionnement du conducteur thermique 3 par rapport au support d'inducteur 8.

Ainsi, lorsque le conducteur thermique 3 est positionné correctement par rapport au support d'inducteur 8, la mesure de la température du fond d'un récipient placé sur un inducteur I situé dans le support d'inducteur 8 est fiable.

Le dispositif pour mesurer la température 10 comporte en outre un premier plateau isolant 6 et un second plateau isolant 7 réalisés en matériau diélectrique et disposés respectivement de part et d'autre de l'ensemble formé par le conducteur thermique 3 et l'élément de support 1.

Au moins un des plateaux isolants 6, 7 recouvre la totalité du conducteur thermique 3.

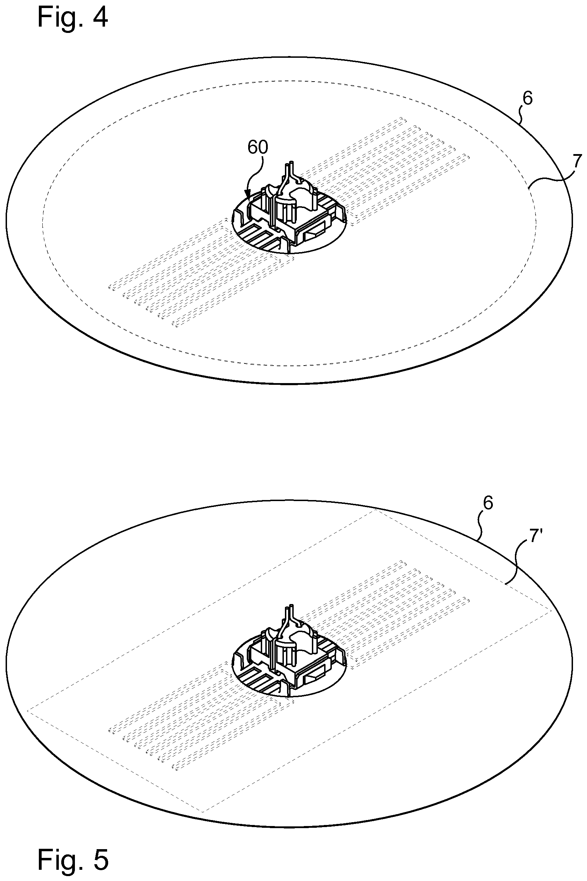

La figure 4 représente un premier mode de réalisation dans lequel le premier plateau isolant 6 et le second plateau isolant 7 sont en forme de disque, c'est-à-dire qu'ils ont une surface plane circulaire.

Dans un mode de réalisation, la taille du premier plateau isolant 6 est telle qu'il recouvre un inducteur I. La taille du second plateau isolant 7 est telle qu'il recouvre le conducteur thermique 3.

Si par exemple, l'inducteur I présente une forme circulaire, le premier plateau isolant 6 présente aussi une forme circulaire, le diamètre du premier plateau isolant 6 étant sensiblement égal au diamètre de l'inducteur I.

Dans un mode de réalisation, les plateaux isolants 6, 7 sont réalisés en mica.

Les plateaux isolants 6, 7 en mica présentent une résistance importante à la chaleur et permettent d'isoler électriquement le dispositif pour mesurer la température.

Bien entendu, les plateaux isolants 6, 7 peuvent être réalisés dans d'autres matériaux, par exemple en film polymère connu sous le nom de Kapton® commercialisé par Du Pont, ou en fibre synthétique connue sous le nom de Nomex® commercialisés aussi par Du Pont.

Dans le mode de réalisation décrit, le premier plateau isolant 6 comporte au centre une ouverture 60 sensiblement circulaire, destinée à recevoir la base de fixation 1b de l'élément de support 1.

Le premier plateau isolant 6 et le second plateau isolant 7 sont fixés entre eux par un élastomère, par exemple un élastomère siliconé bi-composant réticulant à température ambiante.

La figure 5 représente un deuxième mode de réalisation du dispositif pour mesurer la température 10 dans lequel le second plateau isolant 7' est en forme rectangulaire, ayant des dimensions suffisantes pour recouvrir l'intégralité du conducteur thermique 3.

Ce mode de réalisation présente l'avantage de simplifier la découpe du second plateau isolant 7' par rapport à la découpe d'un plateau circulaire.

## Revendications

1. Dispositif pour mesurer la température d'un récipient placé au-dessus d'un inducteur (I) dans une table de cuisson (100), ledit dispositif pour mesurer la température comportant un capteur de température (2), un élément de support (1) dudit capteur de température (2) et un conducteur thermique (3) en contact thermique avec ledit capteur de température (2), et ledit élément de support (1) comporte deux excroissances (4) et ledit conducteur thermique (3) comporte deux pièces de maintien (5), chaque pièce de maintien (5) comportant un évidement (50) destiné à loger une excroissance (4) dudit élément de support (1), ledit conducteur thermique (3) étant en métal.

2. Dispositif pour mesurer la température conforme à la revendication 1, **caractérisé en ce que** ledit conducteur thermique (3) comporte une base (3a) destinée à recevoir ledit élément de support (1), et un ensemble de languettes (3b) partant de ladite base (3a), lesdites pièces de maintien (5) étant deux étriers (5) disposés symétriquement de part et d'autre de ladite base (3a) dudit conducteur thermique (3).

3. Dispositif pour mesurer la température conforme à la revendication 2, **caractérisé en ce que** ladite base (3a) comporte une partie de réception (60) destinée à recevoir ledit capteur de température (2), ladite partie de réception (60) ayant une encoche (60a) de forme complémentaire à la forme dudit capteur de température (2).

4. Dispositif pour mesurer la température conforme à l'une des revendications 1 à 3, **caractérisé en ce que** ledit élément de support (1) comporte un corps de support (1a) destiné à recevoir ledit capteur de température, lesdites excroissances (4) étant disposées symétriquement de part et d'autre dudit corps de support (1a), et une base de fixation (1b) s'étendant en saillie en partant dudit corps de support (1a).

5. Dispositif pour mesurer la température conforme à la revendication 4, **caractérisé en ce que** ladite base de fixation (1b) dudit élément de support (1) a une forme sensiblement cylindrique et comporte au moins une nervure (9) disposée sur la surface cylindrique et s'étendant en partant dudit corps de support (1a).

6. Dispositif pour mesurer la température conforme à l'une des revendications 4 ou 5, **caractérisé en ce que** ledit élément de support (1) comporte deux évidements de connexion (10a, 10b) traversant ledit corps de support (1a) et ladite base de fixation (1b).

7. Dispositif pour mesurer la température conforme à l'une des revendications 4 à 6, **caractérisé en ce que** ladite base de fixation (1b) comporte des gorges (11) s'étendant en partant dudit corps de support (1a).

8. Dispositif pour mesurer la température conforme à l'une des revendications 1 à 7, **caractérisé en ce qu'**il comporte en outre un premier plateau isolant (6) et un second plateau isolant (7) réalisés en matériau diélectrique disposés respectivement de part et d'autre d'un ensemble formé par ledit conducteur thermique (3) et ledit élément de support (1).

9. Dispositif pour mesurer la température conforme à la revendication 8, **caractérisé en ce que** au moins un desdits plateaux isolants (6, 7) recouvre la totalité dudit conducteur thermique (3).

10. Dispositif pour mesurer la température conforme à l'une des revendications 1 à 9, **caractérisé en ce que** ledit élément de support est en matériau élastomère.

11. Ensemble pour mesurer la température d'un récipient placé au-dessus d'un inducteur (I), **caractérisé en ce qu'**il comporte un support d'inducteur (8) pour loger un inducteur (I) et un dispositif pour mesurer la température (10) conforme à l'une des revendications 1 à 10, ledit dispositif pour mesurer la température (10) étant fixé audit support d'inducteur (8).

12. Ensemble pour mesurer la température conforme à la revendication 11, **caractérisé en ce que** ledit support d'inducteur (8) comporte au centre une ouverture (80) sensiblement circulaire destiné à la fixation dudit support d'inducteur (8) avec ledit élément de support (1).

13. Table de cuisson à induction (100) **caractérisée en ce qu'**elle comporte au moins un inducteur (I) et un ensemble pour mesurer la température d'un récipient placé au-dessus dudit au moins un inducteur (I) conforme à l'une des revendications 11 ou 12.

## Patentansprüche

1. Vorrichtung zum Messen der Temperatur eines über einen Induktor (I) in einem Kochfeld (100) abgestellten Gefäßes, wobei die Vorrichtung zum Messen der Temperatur einen Temperatursensor (2), ein Tragelement (1) für den Temperatursensor (2) und einen Wärmeleiter (3) in thermischem Kontakt mit dem Temperatursensor (2) enthält, wobei das Tragelement (1) zwei Vorsprünge (4) aufweist und der Wärmeleiter (3) zwei Halteteile (5) aufweist, wobei jedes Halteteil (5) eine Ausnehmung (50) aufweist, die dazu bestimmt ist, einen Vorsprung (4) des Tragelements (1) unterzubringen, wobei der Wärmeleiter (3) aus Metall besteht.

2. Vorrichtung zum Messen der Temperatur nach Anspruch 1, **dadurch gekennzeichnet, dass** der Wärmeleiter (3) eine Basis (3a) aufweist, die dazu bestimmt ist, das Tragelement (1) aufzunehmen, sowie eine Anordnung von Laschen (3b), die von der Basis (3a) ausgehen, wobei die Halteteile (5) zwei Bügel (5) sind, die beiderseits der Basis (3a) des Wärmeleiters (3) symmetrisch angeordnet sind.

3. Vorrichtung zum Messen der Temperatur nach Anspruch 2, **dadurch gekennzeichnet, dass** die Basis (3a) ein Aufnahmeteil (60) aufweist, das dazu bestimmt ist, den Temperatursensor (2) aufzunehmen, wobei das Aufnahmeteil (60) eine Einkerbung (60a) mit zur Form des Temperatursensors (2) komplementärer Form hat.

4. Vorrichtung zum Messen der Temperatur nach einem der Ansprüche 1 bis 3, **dadurch gekennzeichnet, dass** das Tragelement (1) einen Tragkörper (1a) aufweist, der dazu bestimmt ist, den Temperatursensor aufzunehmen, wobei die Vorsprünge (4) beiderseits des Tragkörpers (1a) symmetrisch angeordnet sind und wobei sich eine Befestigungsbasis (1b) ausgehend vom Tragkörper (1a) vorspringend erstreckt.

5. Vorrichtung zum Messen der Temperatur nach Anspruch 4, **dadurch gekennzeichnet, dass** die Befestigungsbasis (1b) des Tragelements (1) eine im Wesentlichen zylindrische Form hat und zumindest eine Rippe (9) aufweist, die an der zylindrischen Fläche angeordnet ist und sich ausgehend vom Tragkörper (1a) erstreckt.

6. Vorrichtung zum Messen der Temperatur nach einem der Ansprüche 4 oder 5, **dadurch gekennzeichnet, dass** das Tragelement (1) zwei Verbindungsausnehmungen (10a, 10b) aufweist, die den Tragkörper (1a) und die Befestigungsbasis (1b) durchsetzen.

7. Vorrichtung zum Messen der Temperatur nach einem der Ansprüche 4 bis 6, **dadurch gekennzeichnet, dass** die Befestigungsbasis (1b) Nuten (11) aufweist, die sich ausgehend vom Tragkörper (1a) erstrecken.

8. Vorrichtung zum Messen der Temperatur nach einem der Ansprüche 1 bis 7, **dadurch gekennzeichnet, dass** sie ferner eine erste Isolierplatte (6) und eine zweite Isolierplatte (7) aufweist, die aus dielektrischem Material hergestellt und beiderseits einer aus dem Wärmeleiter (3) und dem Tragelement (1) gebildeten Anordnung angeordnet sind.

9. Vorrichtung zum Messen der Temperatur nach Anspruch 8, **dadurch gekennzeichnet, dass** zumindest eine der Isolierplatten (6, 7) den gesamten Wärmeleiter (3) überdeckt.

10. Vorrichtung zum Messen der Temperatur nach einem der Ansprüche 1 bis 9, **dadurch gekennzeichnet, dass** das Tragelement aus Elastomermaterial besteht.

11. Anordnung zum Messen der Temperatur eines über einen Induktor (I) abgestellten Gefäßes, **dadurch gekennzeichnet, dass** sie einen Induktorträger (8) zum Unterbringen eines Induktors (I) und eine Vorrichtung zum Messen der Temperatur (10) nach einem der Ansprüche 1 bis 10 aufweist, wobei die Vorrichtung zum Messen der Temperatur (10) an den Induktorträger (8) befestigt ist.

12. Anordnung zum Messen der Temperatur nach Anspruch 11, **dadurch gekennzeichnet, dass** der Induktorträger (8) in der Mitte eine im Wesentlichen kreisförmige Öffnung (0) aufweist, die zum Befestigen des Induktorträgers (8) mit dem Tragelement (1) bestimmt ist.

13. Induktionskochfeld (100), **dadurch gekennzeichnet, dass** es zumindest einen Induktor (I) und eine Anordnung zum Messen der Temperatur eines über zumindest einen Induktor (I) abgestellten Gefäßes nach einem der Ansprüche 11 oder 12 enthält.

## Claims

1. A device for measuring the temperature of a container placed over an inductor (I) in a cooking hob (100), said device for measuring the temperature comprising a temperature sensor (2), a support member (1) of said temperature sensor (2) and a heat conductor (3) in thermal contact with said temperature sensor (2), and said support member (1) comprises two projections (4) and said heat conductor (3) comprises two holding components (5), each holding component (5) comprising a recess (50) configured to accommodate a protrusion (4) of said support member (1), said heat conductor (3) being of metal.

2. A device for measuring the temperature according to claim 1, **characterized in that** said heat conductor (3) comprises a base (3a) configured to receive said support member (1), and a set of tongues (3b) which start from said base (3a), said holding components (5) being two stirrups (5) disposed symmetrically on respective opposite sides of said base (3a) of said heat conductor (3).

3. A device for measuring the temperature according to claim 2, **characterized in that** said base (3a) comprises a receiving part (60) configured to receive said temperature sensor (2), said reception part (60) having a cut-out (60a) of complementary shape to the shape of said temperature sensor (2).

4. A device for measuring the temperature according to one of claims 1 to 3, **characterized in that** said support member (1) comprises a support body (1a) configured to receive said temperature sensor, said projections (4) being disposed symmetrically on respective opposite sides of said support body (1a), and a fastening base (1b) extending as a projection from said support body (1a).

5. A device for measuring the temperature according to claim 4, **characterized in that** said fastening base (1b) of said support member (1) has a substantially cylindrical shape and comprises at least one rib (9) disposed on the cylindrical surface and extending from said support body (1a).

6. A device for measuring the temperature according to one of claims 4 or 5, **characterized in that** said support member (1) comprises two connection recesses (10a, 10b) passing through said support body (1a) and said fastening base (1b).

7. A device for measuring the temperature according to one of claims 4 to 6, **characterized in that** said fastening base (1b) comprises grooves (11) extending from said support body (1a).

8. A device for measuring the temperature according to one of claims 1 to 7, **characterized in that** it further comprises a first insulating plate (6) and a second insulating plate (7) made from dielectric material disposed respectively on opposite sides of an assembly formed by said heat conductor (3) and said support member (1).

9. A device for measuring the temperature in accordance with claim 8, **characterized in that** at least one of said insulating plates (6, 7) covers the entirety of said heat conductor (3).

10. A device for measuring the temperature according to one of claims 1 to 9, **characterized in that** said support member is of elastomer material.

11. An assembly for measuring the temperature of a container placed over an inductor (I), **characterized in that** it comprises an inductor support (8) for housing an inductor (I) and a device for measuring the temperature (10) in accordance with one of claims 1 to 10, said device for measuring the temperature (10) being fastened to said inductor support (8).

12. An assembly for measuring the temperature according to claim 11, **characterized in that** said inductor support (8) comprises in the center a substantially circular opening (80) configured for the fastening of said inductor support (8) with said support member (1).

13. An induction cooking hob (100) **characterized in that** it comprises at least one inductor (I) and a assembly for measuring the temperature of a container placed above said at least one inductor (I) in accordance with one of claims 11 or 12.
